(19) Europäisches Patentamt
European Patent Office
Office européen des brevets

(11) Publication number: **0 131 058**
**B1**

(12) # EUROPEAN PATENT SPECIFICATION

(45) Date of publication of patent specification: **27.01.88**

(21) Application number: **83106093.4**

(22) Date of filing: **22.06.83**

(51) Int. Cl.[4]: **G 02 B 6/04,** G 02 B 6/44, B 29 D 11/00, D 01 F 8/04, D 01 D 5/34

(54) **Optical fiber assembly and process for preparing same.**

(43) Date of publication of application:
**16.01.85 Bulletin 85/03**

(45) Publication of the grant of the patent:
**27.01.88 Bulletin 88/04**

(84) Designated Contracting States:
**CH DE FR GB IT LI NL SE**

(56) References cited:
**EP-A-0 094 057**
**EP-A-0 112 564**
**FR-A-2 252 586**
**FR-A-2 393 503**
**GB-A-1 037 498**
**GB-A-1 088 592**
**GB-A-1 143 689**
**US-A-3 556 635**
**US-A-4 011 007**
**US-A-4 370 114**

(73) Proprietor: **MITSUBISHI RAYON CO. LTD.**
**3-19, Kyobashi 2-chome Chuo-Ku**
**Tokyo 104 (JP)**

(72) Inventor: **Yamamoto, Takashi**
**216-35, Ono-cho**
**Saiki-gun Hiroshima-ken (JP)**
Inventor: **Sakunaga, Kenichi**
**12-1, Miyuki-cho**
**Otake-shi Hiroshima-ken (JP)**

(74) Representative: **Abitz, Walter, Dr.-Ing. et al**
**Abitz, Morf, Gritschneder, Freiherr von**
**Wittgenstein Postfach 86 01 09**
**D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 131 058 B1**

**Description**

This invention relates to an optical fiber assembly comprising at least two plastic optical fibers, each plastic optical fiber comprising a core of a polymer having a refractive index $n_1$ and a cladding of a polymer having a refractive index $n_2$, said plastic optical fibers being arranged substantially in parallel to each other and embedded in an embedding material of a polymer having a refractive index $n_3$, and also to a process for the preparation of this optical fiber assembly.

Optical fiber assemblies, such as those composed of at least two optical fibers arranged substantially in parallel to each other and bonded to each other, are increasingly used as light transmitting members for optical communication, high speed data transmission, various process controls, office automation, computers and the like.

One form of an optical fiber assembly, which is formed of a great number of optical fibers gathered and bonded to each other, is disclosed in Japanese Patent Publication No. 27279/64. According to the process disclosed in this patent publication, a rod of a polymer having a high refractive index is melt-drawn to form a core, and the surface of the core is covered with a polymer having a low refractive index to form a core-cladding step index type optical fiber. A number of so-prepared optical fibers are wound on a drum in parallel to one another, and they are bonded together so that the claddings are closely contacted with each other to form an optical fiber bundle. The optical fiber bundle is cut and opened to form an optical fiber sheet. Since the thickness of the cladding of the optical fiber used in this process is very small, i.e. less than about 50 µm, core-to-core bonding is undesirably formed when these optical fibers are bonded together, with the result that the light transmission characteristics of the optical fiber sheet are reduced. If this optical fiber sheet is bent or an external force is applied for processing or handling, the bonded portions of the optical fibers are broken and deformation is caused in the claddings of the optical fibers. A drastic reduction of the light transmission characteristics also results.

As an optical fiber assembly in which the above-mentioned disadvantage is eliminated, Japanese Patent Publication No. 23165/78 proposes an optical fiber assembly formed of core-cladding optical fibers having a non-circular (for example, rectangular or hexagonal) core section. When a bending force or external force is applied to this optical fiber assembly on handling thereof, breakage of the bonded portions of the optical fibers is not caused. However, since the core of each optical fiber has a non-circular section, the light transmission characteristics of this optical fiber assembly are inferior. Therefore, a need continues to exist for an optical fiber assembly wherein breakage of the bonded portions of the optical fibers does not occur when a bending force or external force is applied thereto, and which also possesses excellent light transmission characteristics.

U.S. Patent 3,556,635 discloses a synthetic resinous thermoplastic elongate fiber optic bundle, the fiber optic bundle having a first end and a second end, the bundle consisting essentially of a plurality of generally parallel optically transparent synthetic thermoplastic resinous filaments extending from the first end to the second end, a synthetic resinous matrix of a continuous nature surrounding said filaments, the transparent filaments being substantially individually encapsulated within, a thermoplastic extrudable material having a refractive index difference of at least two percent from the refractive index of the resinous material forming the transparent filaments, the fiber optic bundle being thermoplastic and prepared by simultaneous extrusion. Although the above-mentioned problem is solved with that optical fiber, the bonding between core polymer and cladding polymer, on the one hand, and cladding polymer and embedding polymer, on the other hand, is still not satisfactory. For the preparation of good optical fiber assemblies, the adhesiveness and adhesion should be good in the interface between the cladding and core and in the interface between the cladding and embedding portion. Using optical fibers which are insufficient in these properties, peeling or breakage of the cladding is readily caused, and, an optical fiber assembly having excellent characteristics cannot be obtained.

It would therefore be desirable to have available a cladding polymer material with which the said disadvantages do not occur and therefore permit of the preparation of optical fiber assemblies which have excellent properties and characteristics.

In the elder, nonprepublished EP—A—112 564, there is described a plastic optical fiber having an enhanced light transmission and satisfactory mechanical and chemical properties which is composed of a core having a refractive index $n_1$, a cladding layer having a refractive index $n_2$, and a protective layer having a refractive index $n_3$, the refractive indices $n_1$, $n_2$, and $n_3$ satisfying the relationships:

$$n_1 - n_2 \geqq 0.01$$

and

$$n_3 - n_2 > 0$$

and the cladding layer being composed of a copolymer of:

(A) 20% to 99.95% by weight of at least one comonomer selected from fluoroalkyl acrylates and methacrylates,

(B) 0.05% to 10% by weight of at least one vinyl comonomer having a hydrophilic radical, and

(C) 0% to 79.95% by weight of at least one other vinyl comonomer capable of copolymerizing with the comonomers (A) and (B).

With the present invention, there is provided an optical fiber assembly comprising at least two plastic optical fibers and an embedding material, said plastic optical fibers being arranged substantially in parallel to each other and embedded in said embedding material, wherein each plastic optical fiber comprises a core of polymer having a refractive index, $n_1$, and a cladding of a polymer having a refractive index, $n_2$, wherein the refractive indices $n_1$ and $n_2$ satisfy the following relationship [I]

$$n_1-n_2>0.01 \quad [I]$$

and wherein said embedding material comprises a polymer having a refractive index, $n_3$, characterized in that the polymer of the cladding (2) is a copolymer comprising (A) 30 to 99.95% by weight of a polyfluoroalkyl ester of acrylic acid or methacrylic acid, (B) 0.05 to 10% by weight of a vinyl monomer containing at least one hydrophilic group and (C) 0 to 69.95% by weight of one or more copolymerizable vinyl monomers, thereby attenuating the refractive index $n_2$ of said cladding polymer, wherein said refractive indices $n_2$ and $n_3$ satisfy the following relationship [II]

$$n_3-n_2>0 \quad [II]$$

Figure 1(a) and 1(b) show the cross-sections of a conventional optical fiber assembly;

Figure 2(a) and 2(b) show the cross-sections of another conventional optical fiber assembly;

Figure 3 shows the cross-section of an optical fiber used in the present invention;

Figure 4(a), 4(b), 4(c), and 4(d) show the cross-sections of the optical fiber assemblies of the present invention; and

Figure 5(a) and 5(b) show the cross-sections of the spinneret assemblies used for the preparation of the optical fiber assemblies of the present invention.

As described hereinbefore, a prior art optical fiber assembly as disclosed in Japanese Patent Publication No. 27279/64 has the cross-section shown Figure 1(a). When this optical fiber assembly is bent or an external force is applied for processing or handling, the bonded portions 3 of the optical fibers tend to be broken as shown in Figure 1(b). Another prior art optical fiber assembly as disclosed in Japanese Patent. Publication No. 23165/78 has the cross-section shown in Figure 2(a) or 2(b). Each optical fiber core 1 has a non-circular cross-section such as a rectangular or hexagonal section, and hence, the light transmission characteristics of the optical fiber assembly are not satisfactory.

In contrast, the optical fiber assembly of the present invention has a cross-section shown in Figure 4(a), 4(b), 4(c) or 4(d). This optical fiber assembly is formed advantageously by using optical fibers having a sectional structure shown in Figure 3, that is, step index type plastic optical fibers comprising a core 1 of a polymer having a refractive index $n_1$ and a cladding 2 of a polymer having a refractive index $n_2$, which are embedded in an embedding material 5 of a polymer having a refractive index $n_3$. When an optical fiber assembly is formed from the optical fiber having a sectional structure as shown in Figure 3, that is, a multilayer core-clad structure comprising a core, a cladding and an embedding portion, the thickness of the embedding portion can freely be controlled without affecting the light transmission characteristics. When at least two optical fibers of this type having a multilayer core-cladding structure, especially a three-layer structure, are bonded together, formation of an optical fiber assembly becomes possible by bonding the embedding portions. This process is quite different from the above mentioned process in which claddings of optical fibers are bonded together in the preparation of the optical fiber assembly. As pointed out hereinbefore, in the optical fiber assembly formed according to that known process, the light transmission characteristics are reduced by breakage of the bonded claddings.

According to the present invention, at least two step index type plastic optical fibers comprising a core 1 of a polymer having a refractive index $n_1$ and a cladding 2 of a polymer having a refractive index $n_2$ are embedded substantially in parallel to each other in an embedding material 5 of a polymer having a refractive index $n_3$, wherein the refractive indexes $n_1$ and $n_2$ satisfy the following formula [I]:

$$n_1-n_2\geqq 0.01 \quad [I]$$

In the case of optical fibers not satisfying the formula [I], reflection of the light incident into the core on the interface between the core and cladding is insufficient and the light transmission characteristics are poor. Thus, an optical fiber assembly having good optical transmission characterstics cannot be obtained from such optical fibers. The larger the value of $(n_1-n_2)$, the more improved are the light transmission characteristics in the optical fibers. Ordinarily, however, this value is adjusted within the range of from 0.01 to 0.20.

In order to obtain optical fibers in which generation of noises is minimized, it is necessary that the polymers for the cladding and embedding material be selected so that the following formula [II]:

$$n_3-n_2>0 \quad [II]$$

is satisfied.

Polymers having excellent optical transparency are used in the present invention. For example, there may be used polystyrene (n=1.59), polymethyl methacrylate (n=1.49), a styrene/methyl methacrylate

copolymer (n=1.50—1.58), poly-4-methylpentene-1 (n=1.46), a polycarbonate (n=1.50—1.59), a methyl methacrylate/styrene/maleic anhydride copolymer (n=1.50—1.58), a methyl methacrylate/styrene/α-methylstyrene/maleic anhydride copolymer (n=1.50—1.58), a methyl methacrylate/vinyltoluene/maleic anhydride copolymer (n=1.50—1.58), fluorine-containing polymers having a value n of 1.38 to 1.48, such as a polyfluoroalkyl methacrylate polymer and a vinylidene fluoride/tetrafluoroethylene copolymer, and deuteration products of the foregoing polymers, especially deuterated polystyrene (n=1.59) and deuterated polymethyl methacrylate (n=1.49), wherein n indicates the refractive index of each polymer.

In the multilayer core-cladding optical fiber used for the preparation of the optical fiber assembly of the present invention, the adhesiveness and adhesion has to be good in the interface between the cladding and core and in the interface between the cladding and embedding portion. Using optical fibers which are insufficient in these properties, peeling or breakage of the cladding is readily caused, and, the optical fiber assembly of the present invention having excellent characteristics cannot be obtained. In view of the foregoing, it is necessary that a copolymer comprising (A) 30 to 99.95% by weight of a polyfluoroalkyl ester of acrylic acid or methacrylic acid, (B) 0.05 to 10% by weight of a vinyl monomer containing at least one hydrophilic group (hereinafter referred to as "hydrophilic monomer") and (C) 0 to 69.95% by weight of another copolymerizable vinyl monomer or monomers be used as the polymer for formation of the cladding. If the copolymerization ratio of the monomer (A) is lower than 30% by weight, the refractive index of the copolymer is too high and a cladding suitable for the production of an optical fiber having good light transmission characteristics cannot be formed. If the copolymerization ratio of the monomer (A) exceeds 99.95% by weight, the adhesion of the cladding to the core or embedding material becomes insufficient.

Various polyfluoroalkyl esters of acrylic acid and methacrylic acid may be used, and products obtained by the ester-forming reaction between acrylic acid or methacrylic acid and trifluoroethanol, tetrafluoropropanol or pentafluoropropanol are preferred.

A fluorine-containing copolymer in which the copolymerization ratio of the hydrophilic monomer is lower than 0.05% by weight is insufficient in adhesion and resistance to heat decomposition. In contrast, a copolymer in which the copolymerization ratio of the above-mentioned monomer exceeds 10% by weight does not satisfy the requirements of the transparency and refractive index for the cladding material.

Suitable carboxyl group-containing monomers as the hydrophilic monomer, include ethylenically unsaturated mono- and di-carboxylic acid monomers, ethylenically unsaturated epoxy monomers, ethylenically unsaturated carboxylic acid amides, N-alkylcarboxylic acid amides, N-methylolcarboxylic acid amides, N-alkyl ethers of these acid amides, and ethylenically unsaturated polycarboxylic acid monomers.

Suitable ethylenically unsaturated mono- or dicarboxylic acid monomer, include, for example, acrylic acid, methacrylic acid, crotonic acid, maleic acid, fumaric acid, itaconic acid, glutaconic acid, 3-methylglutaconic acid, muconic acid, dihydromuconic acid, methylene-malonic acid, citraconic acid, mesaconic acid, methylene-glutaric acid and monomers represented by the following formula:

$$CH_2{=}\overset{\displaystyle R_1}{\overset{|}{C}}{-}COO{-}R_2{-}OOC{-}R_3{-}(COOH)_n$$

wherein $R_1$ stands for $-H$ or $-CH_3$, $R_2$ stands for an alkylene group having 2 to 4 carbon atoms, $R_3$ stands for an alkylene group having 2 to 3 carbon atoms, $-CH{=}CH-$ or a phenylene group, and n is an integer of 1 or 2.

From the viewpoint of improving the adhesiveness or thermal stability, acrylic acid and methacrylic acid are especially preferred as the hydrophilic monomer.

Suitable glycidyl group-containing monomers as another type of hydrophilic monomer include glycidyl methacrylate, glycidyl acrylate, β-methylglycidyl methacrylate, β-methylglycidyl acrylate and allyl glycidyl ether. Of these, glycidyl methacrylate and methylglycidyl methacrylate are preferred.

Suitable carboxylic acid amine group-containing monomers include the ethylenically unsaturated carboxylic acid amides, N-alkylcarboxylic acid amides, N-methylolcarboxylic acid amides and alkyl ethers thereof.

Suitable amide group-containing monomers, include acrylamide, methacrylamide, N-methacrylamide, N-methylmethacrylamide, N,N-diethylacrylamide, N,N-diethylmethacrylamide, maleic acid amide, fumaric acid amide, itaconic acid amide, monoamides, diamides and ester amides of other ethylenically unsaturated dicarboxylic acids, N-methylolacrylamide, N-methylolmethacrylamide, and derivatives thereof.

Suitable hydroxyl group-containing monomers, include hydroxyethyl acrylate, hydroxyethyl methacrylate, hydroxypropyl acrylate, hydroxypropyl methacrylate, hydroxybutyl acrylate, hydroxybutyl methacrylate, hydroxyhexyl acrylate and hydroxyhexyl methacrylate.

Suitable vinyl monomer (C) includes, for example, methyl methacrylate, ethyl methacrylate, n-propyl methacrylate, n-butyl methacrylate, nonyl methacrylate, lauryl methacrylate, methyl acrylate, n-butyl acrylate, 2-ethylhexyl acrylate, styrene, α-methylstyrene and maleic anhydride, or a mixture thereof. In view of the copolymerization characteristics, esters of methacrylic acid are preferred.

If it is only intended to reduce the refractive index of the cladding material, it is preferred that the vinyl monomer (C) not be present in the polymer constituting the cladding material. However, since the vinyl

monomer (C) acts as a refractive index-adjusting agent, it is preferred that the vinyl monomer (C) is copolymerized in an amount of from 0 to 69.95% by weight in the polymer constituting the cladding material. If the copolymerization ratio of the vinyl monomer (C) exceeds 69.95% by weight, the refractive index of the resulting polymer becomes too high and the polymer is not suitable for use as the cladding material. Furthermore, this vinyl monomer (C) is effective for adjusting the glass transition temperature of the polymer to be used as the cladding material. For example, if a vinyl monomer which homopolymerizes to a material having a high glass transition temperature is copolymerized, the resulting copolymer will also have a high glass transition temperature. If a vinyl monomer which yields a homopolymer having a low glass transition temperature is copolymerized, the resulting copolymer will also have a low glass transition temperature. Accordingly, the vinyl monomer (C) is appropriately selected according to the intended use of the optical fiber assembly.

An ordinary radical polymerization initiator may be used as the polymerization catalyst for formation of the polymer used as the cladding material in the present invention. For example, organic peroxides such as di-tert-butyl peroxide, dicumyl peroxide, methyl ethyl ketone peroxide, tert-butyl perphthalate, tert-butyl perbenzoate, methyl isobutyl ketone peroxide, lauroyl peroxide, cyclohexyl peroxide, 2,5-dimethyl-2,5-di-tert-butyl-peroxyhexane, tert-butyl peroctanoate, tert-butyl perisobutyrate and tert-butyl-peroxyisopropyl carbonate, and azo compounds such as methyl 2,2'-azobisisobutyrate, 1,1'-azobiscyclohexane carbonitrile, 2-phenylazo-2,4-dimethyl-4-methoxyvaleronitrile, 2-carbamoyl-azobisisobutyronitrile, 2,2'-azobis(2,4-dimethylvaleronitrile) and 2,2'-azobisisobutyronitrile can be used.

Alkylmercaptans which are customarily used as a modifier of the polymerization degree, may be used as a chain transfer agent at the step of forming the cladding polymer.

Any conventional polymerization means may be used in this process including suspension polymerization, bulk polymerization and solution polymerization. In order to obtain a polymer having a high purity, a bulk polymerization process is preferred.

The multilayer core-cladding optical fibers used in the present invention should have such properties that when an optical fiber assembly is formed by bonding at least two optical fibers, reduction of the light transmission characteristics due to breakage of the cladding and deformation of the interface between the core and cladding is not caused. Since the multilayer core-clad optical fibers used in the present invention have an embedding portion around the cladding, the optical fibers of the present invention are more advantageous as compared with the conventional step index type optical fibers having a two-layer structure in that occurrence of the above-mentioned troubles is substantially prevented when an optical fiber assembly is prepared. In order to further obviate the occurrence of the above difficulties, it is preferred that the thickness of the cladding of the optical fiber having a multilayer core-cladding structure, which is used in the present invention, be 1 to 30 μm, especially 2 to 20 μm. If the thickness of the cladding is smaller than 1 μm, the light reflecting property in the core-cladding interface is reduced. If the thickness of the cladding is larger than 30 μm, peeling or cracking is readily caused in the core-cladding interface.

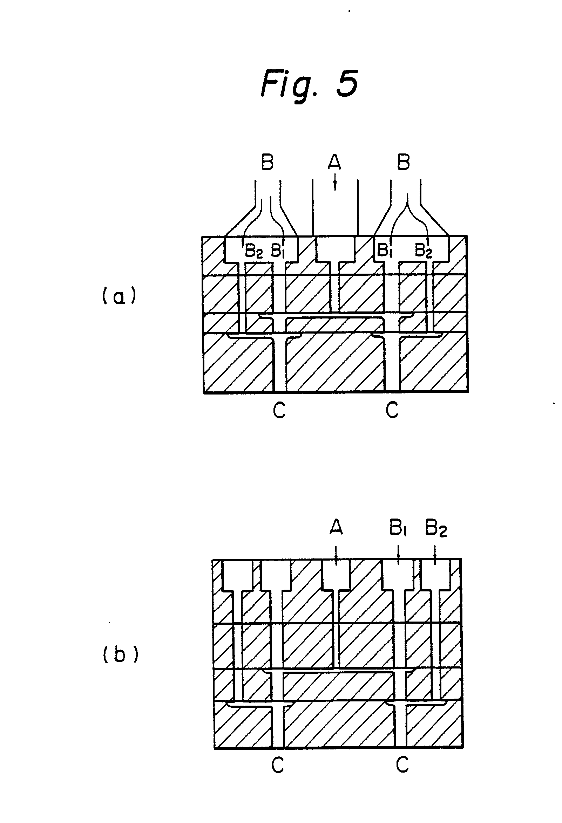

The thickness of the cladding can be controlled by controlling the supply of the polymer to a zone A of a spinneret apparatus shown in Figure 5. According to one preferred method of this invention, optical fibers extruded from the spinneret are drawn at a temperature of 120 to 180°C and a draw ratio of 1.1 to 5.0.

The optical fiber assembly of the present invention may be prepared according to various methods as described below.

According to the first method, at least two core-cladding optical fibers are formed from two polymers satisfying the requirement of the formula [I] and extruded together in an embedding portion composed of a melt of a polymer having refractive index $n_3$, satisfying the requirement of the formula [II], to form a sheet or rod in which the optical fibers are arranged substantially in parallel to each other, and then, the sheet or rod is cooled to be solidified. According to the second method, polymers having refractive indexes $n_1$, $n_2$ and $n_3$ satisfying the requirements of the formulae [I] and [II] are extruded from a spinneret in the form of optical fibers having an embedding polymer surrounding the optical fibers with at least two of the individual optical fibers arranged substantially in parallel to each other before they are cooled to be solidified, whereby they are bonded to each other through the embedding portions by fusion, and then, the optical fibers surrounded by the embedding are cooled to be solidified. According to the third method, multilayer core-cladding optical fibers and an embedding polymer, formed in the same manner as in the second method, are cooled and thereby solidified and a plurality of these optical fibers surrounded by embedding are arranged substantially in parallel and bonded together through the embedding portions by heating them. Among these methods, the third method is most preferred.

This last and preferred method will now be described in detail. At first, optical fibers are melt-shaped by using a spinning nozzle assembly shown in Figure 5-(a) or 5-(b). A polymer having a refractive index $n_1$ is supplied to a zone $B_1$ of the spinning nozzle, and then, a polymer having a refractive index $n_2$ is supplied to a zone A to form a core-cladding structure. Then, a polymer having a refractive index $n_3$ is supplied to a zone $B_2$ to form an embedding material. The polymers are thus extruded from the orifices to prepare a number of optical fibers having a multilayer core-cladding structure. The optical fibers are arranged in parallel to one another, and the embedding portions of the fibers are bonded together before cooling and solidification thereof. Solidification under cooling is then effected to form an optical fiber assembly of the present invention. According to this method, the core-cladding interface is prevented from falling in direct contact with the opening face of the nozzle when the optical fibers are prepared. Since the conventional

step index type optical fibers have a core-cladding two-layer structure, the core-cladding interface is brought very close to the opening face of the nozzle, and therefore, disturbance is caused because of the Barus effect at the time of extrusion. Furthermore, even if the nozzle is formed at a very precision, fine scratches or stains are present on the opening face of the nozzle and hence, disturbance is caused on the opening face of the nozzle. Therefore, according to the conventional techniques, optical fibers excellent in the light transmission characteristics cannot be obtained. In contrast, according to the above-mentioned method of the present invention, access of the core-cladding interface to the opening face of the nozzle is moderated and the extruded fibers do not undergo bad influences of the Barus effect. Moreover, even if scratches or stains are present on the opening face of the nozzle, a smooth interface can be formed by dint of viscosity characteristics of the molten polymers. Accordingly, optical fibers having very excellent light transmission characteristics can be obtained.

In the optical fiber assembly of the present invention, at least two optical fibers, scores of thousands of optical fibers in some cases, are arranged substantially in parallel to one another and they are bonded together through the embedding portions. This optical fiber assembly is preferably prepared by using a spinning device comprising orifices arranged at intervals of 0.05 to 5 mm. If the orifice distance is too small, undesirable adhesion of fibers by fusion is caused on the lower face of the nozzle device and formation of optical fibers having good light transmitting characteristics becomes difficult. If the orifice distance is too large, troubles are readily caused at the subsequent step of bonding the optical fibers through the embedding portions.

Bonding of optical fibers through the embedding portions should be carried out so that the claddings of the optical fibers are not damaged and that a substantially parallel arrangement is maintained. In order to form an optical fiber assembly having good properties while satisfying these requirements, it is preferred that the thickness of the embedding portion of each optical fiber be 0.5 to 100 μm, more preferably 1 to 50 μm. If the thickness of the embedding portion is smaller than 0.5 μm, an optical fiber assembly having a high fiber accumulation density can easily be obtained, but the claddings are readily damaged when the optical fibers are bonded together. If the thickness of the embedding portion exceeds 100 μm, bonding of optical fibers through the embedding portions can be facilitated and the claddings are hardly damaged at the time of bonding, but an optical fiber assembly having a high fiber accumulation density can hardly be obtained. The thickness of the embedding portion can be adjusted, for example, by controlling the amount of the polymer to be supplied to the zone $B_1$ of the apparatus shown in Figure 5, and by drawing the extrudate at a temperature of 120 to 180°C and a draw ratio of 1.1 to 5.0.

An assembly of substantially parallel optical fibers, the production of which is very difficult according to the conventional methods, can easily be prepared according to the present invention. In the present invention, if a plurality of sheet-like assemblies of substantially parallel optical fibers are piled and laminated, an optical fiber assembly having a larger capacity can easily be obtained.

In the conventional step index type optical fiber assembly, with an increase of the number of the optical fibers to be arranged in parallel to one another, the flexibility is reduced and the handling property is degraded. In contrast, in the optical fiber assembly of multilayer core-cladding optical fibers according to the present invention, the intended flexibility can easily be maintained. More specifically, after both the end face portions of the optical fiber assembly are secured, the intermediate part between both the end face portions which is required to be flexible is crumpled to release the bonding in the embedding portions, whereby the intended flexibility can be maintained. In the case of a fiber assembly formed by bonding the conventional step index type optical fibers, if the bonding is released in an intermediate part between both the end face portions, as shown in Figure 1-(b), the claddings of the optical fibers are damaged and reduction of the light transmission characteristics cannot be avoided. The optical fiber assembly of the present invention, which is formed by bonding multilayer core-cladding optical fibers, avoids the above-mentioned disadvantage.

The present invention will now be described in detail with reference to the following examples that by no means limit the scope of the invention. In the examples, parts are by weight.

Example 1

An autoclave for bulk polymerization having an inner capacity of 2 liters was charged with 100 parts of a monomer mixture shown in Table 1 for a cladding polymer, 0.05 part of azobisisobutyronitrile and 0.1 part of n-dodecylmercaptan. Polymerization was carried out at 50°C for 10 hours and at 70°C for 5 hours to obtain a cladding polymer having properties shown in Table 2.

Separately, a mixture comprising 100 parts of methyl methacrylate, 0.40 part of t-butylmercaptan and 0.0017 part of di-tert-butyl peroxide was heated at a temperature of 155°C for a residence time of 4 hours according to a continuous bulk polymerization method using a reaction vessel provided with a spiral ribbon type stirrer. The reaction mixture thus obtained was fed to a devolatizer as shown in GB—A—1,423,288 provided with a twin-screw vent. Then, the polymer melt thus formed was supplied as core polymer as well as embedding polymer to an extruder where volatile components were removed through a vent kept at a temperature of 240°C and under a pressure of 5.3 mbar (4 mmHg).

The extruding portion was kept at a temperature of 230°C. Then, the polymer thus formed was supplied to a spinning head maintained at 230°C.

Also the cladding polymer was melted and supplied to the spinning head. The polymers were extruded at 230°C through a spinneret shown in Figure 5-(a) (the orifice diameter was 1.0 mm, the number of orifices was 100 and the orifice distance was 1.0 mm). The spun fibers were taken up at a speed of 10 m/min and drawn at a temperature of 140°C and a draw ratio of 1.8. A guide was disposed at the outlet of the drawing box, and 100 optical fibers were gathered and bonded together through the embedding material to form an optical fiber assembly in which the 100 optical fibers were arranged in a plane. The distances between every two adjacent fibers were uniform. The fibers were regularly arranged and no unevenness of the light transmitting property was observed. The optical fibers had a core diameter of 100 μm and properties shown in Table 2.

TABLE 1

| Run No. | Core | Composition (% by weight) of cladding polymer | | |
|---|---|---|---|---|
| | | 2,2,3,3-Tetra-fluoropropyl methacrylate | Copolymerized vinyl monomer | Hydrophilic monomer |
| 1 | polymethyl methacrylate | 90 | 8, methyl methacrylate | 2, methacrylic acid |
| 2 | Ditto | 90 | Ditto | 2, acrylic acid |
| 3 | Ditto | 90 | Ditto | 2, glycidyl methacrylate |
| 4 | Ditto | 90 | Ditto | 2, N-octylacrylamide |
| 5 | Ditto | 90 | Ditto | 2, N-butoxymethylacrylamide |
| 6 | Ditto | 90 | Ditto | 2, condensate prepared from hydroxyethyl acrylate and phthalic anhydride |
| 7 | Ditto | 70 | 18, methyl methacrylate | 2, methacrylic acid |
| 8 | Ditto | 99.5 | — | 0.5, methacrylic acid |
| 9 | Ditto | 70 | 29, methyl methacrylate | 1, methacrylic acid |
| 10 | Ditto | 90 | — | 10, methacrylic acid |
| 11 | Ditto | 90 | 10, methyl methacrylate | — |
| 12 | Ditto | 99.5 | 0.5 methyl methacrylate | — |

TABLE 2

| Run No. | Properties of cladding: Thickness (μm) | Properties of cladding: Refractive index ($n_D^{25}$) | Properties of cladding: Adhesiveness | Thickness (μm) of embedding portion | Light transmission loss (dB/km): 520 nm | Light transmission loss (dB/km): 570 nm | Light transmission loss (dB/km): 650 nm | Opening number: Measured value | Opening number: Theoretical value | State of core-cladding interface of | Cracking resistance of cladding |
|---|---|---|---|---|---|---|---|---|---|---|---|
| 1 | 2 | 1.427 | o | 8 | 82 | 75 | 125 | 0.408 | 0.436 | Circular and smooth | Excellent |
| 2 | 2 | 1.425 | o | 8 | 87 | 85 | 133 | 0.350 | 0.422 | Ditto | Ditto |
| 3 | 2 | 1.426 | o | 8 | 95 | 88 | 139 | 0.328 | 0.439 | Ditto | Ditto |
| 4 | 2 | 1.427 | o | 8 | 94 | 87 | 139 | 0.322 | 0.436 | Ditto | Ditto |
| 5 | 2 | 1.427 | o | 8 | 98 | 91 | 150 | 0.329 | 0.436 | Ditto | Ditto |
| 6 | 2 | 1.428 | o | 8 | 93 | 87 | 139 | 0.372 | 0.436 | Ditto | Ditto |
| 7 | 2 | 1.433 | o | 8 | 87 | 78 | 138 | 0.383 | 0.432 | Ditto | Ditto |
| 8 | 2 | 1.417 | o | 8 | 89 | 79 | 138 | 0.435 | 0.467 | Ditto | Ditto |
| 9 | 2 | 1.428 | o | 8 | 115 | 99 | 156 | 0.415 | 0.436 | Ditto | Ditto |
| 10 | 2 | 1.430 | o | 8 | 109 | 98 | 154 | 0.370 | 0.426 | Ditto | Ditto |
| 11 | 2 | 1.428 | x | 8 | 201 | 195 | 218 | 0.27 | 0.426 | Ditto | Fairly good |
| 12 | 2 | 1.417 | x | 8 | 192 | 205 | 209 | 0.28 | 0.467 | Ditto | Fairly good |

Example 2

An optical fiber assembly was prepared in the same manner as described in Example 1 except that a pentafluoropropyl methacrylate/methyl methacrylate/methacrylic acid copolymer (70/28/2 weight ratio) having a refractive index of 1.422 was used as the cladding polymer. The properties of the optical fiber assembly thus obtained are shown in Table 3.

TABLE 3

| Run No. | Core diameter (μm) | Cladding thickness (μm) | Thickness of embedding portion (μm) | Bending resistance | Unevenness of light transmitting property | Light transmission loss (dB/km) (650 nm) | Width (mm) of sheet |
|---|---|---|---|---|---|---|---|
| 13 | 280 | 4 | 6 | No peeling in interface | Not observed | 182 | 30 |
| 14 | 286 | 8 | 50 | Ditto | Ditto | 183 | 40 |
| 15 | 236 | 16 | 16 | Ditto | Ditto | 182 | 30 |
| 16 | 268 | 16 | 50 | Ditto | Ditto | 184 | 40 |
| 17 | 300 | 50 | 50 | Partial peeling | Ditto | 185 | 50 |
| 18 | 280 | 0.6 | 9.4 | No peeling | Observed | 1500 | 30 |

Example 3

An optical fiber assembly was prepared in the same manner as described in Example 1 except that a trifluoroethyl acrylate/methyl methacrylate/methacrylic acid copolymer (65/33/2 weight ratio) having a refractive index 1.440 was used as the cladding polymer. Incidentally, the value of $(n_1-n_2)$ was 0.05, the value of $(n_3-n_2)$ was 0.05, and $n_1$ was equal to $n_3$. The properties of the obtained optical fiber assembly are shown in Table 4.

TABLE 4

| Run No. | Core diameter (μm) | Cladding thickness (μm) | Thickness (μm) of embedding portion | Light transmission loss (dB/km) | Bending resistance |
|---|---|---|---|---|---|
| 19 | 472 | 4 | 10 | 165 | Excellent |
| 20 | 464 | 8 | 10 | 163 | Ditto |
| 21 | 428 | 16 | 20 | 160 | Ditto |

Example 4

Three-layer optical fibers were prepared by spinning a polymer shown in Table 5 as the core-forming polymer, the fluorine-containing polymer used in Example 2 as the cladding polymer and polymethyl methacrylate as the embedding polymer. In the obtained optical fiber, the core diameter was 190 μm, the thickness of the cladding was 10 μm and the thickness of the embedding portion was 20 μm. The obtained results are shown in Table 5.

TABLE 5

| Run No. | Core-forming polymer Kind | $n_1$ value | $n_1-n_2$ | $n_3-n_2$ | $n_1-n_3$ | Light transmission loss (dB/km) | Bending resistance |
|---|---|---|---|---|---|---|---|
| 22 | Polystyrene | 1.59 | 0.16 | 0.06 | 0.10 | 165 (630 nm) | No peeling in core-cladding interface |
| 23 | Polycarbonate | 1.58 | 0.15 | 0.06 | 0.09 | 1200 (770 nm) | Ditto |
| 24 | Deuterated polymethyl methacrylate | 1.49 | 0.06 | 0.06 | 0 | 52 (670 nm) | Ditto |
| 25 | Deuterated polystyrene | 1.59 | 0.16 | 0.06 | 0.10 | 124 (690 nm) | Ditto |

**Claims**

1. An optical fiber assembly comprising at least two plastic optical fibers and an embedding material (5), said plastic optical fibers being arranged substantially in parallel to each other and embedded in said embedding material (5), wherein each plastic optical fiber comprises a core (1) of polymer having a refractive index, $n_1$, and a cladding (2) of a polymer having a refractive index, $n_2$, wherein the refractive indices $n_1$ and $n_2$ satisfy the following relationship [I]

$$n_1-n_2>0.01 \qquad [I]$$

and wherein said embedding material comprises a polymer having a refractive index, $n_3$, characterized in that the polymer of the cladding (2) is a copolymer comprising (A) 30 to 99.95% by weight of a polyfluoroalkyl ester of acrylic acid or methacrylic acid, (B) 0.05 to 10% by weight of a vinyl monomer containing at least one hydrophilic group and (C) 0 to 69.95% by weight of one or more copolymerizable vinyl monomers, thereby attenuating the refractive index $n_2$ of said cladding polymer, wherein said refractive indices $n_2$ and $n_3$ satisfy the following relationship [II]

$$n_3-n_2>0 \qquad [II]$$

2. The optical fiber assembly according to Claim 1, wherein said core polymer of the plastic optical fibers comprises polystyrene, refractive index of 1.59; polymethyl methacrylate, refractive index of 1.49; styrene/methyl methacrylate copolymer, refractive index of 1.50 to 1.58; poly-4-methyl-1-pentene, refractive index of 1.46; polycarbonate, refractive index of 1.50 to 1.59; methyl methacrylate/styrene/maleic anhydride copolymer, refractive index of 1.50 to 1.58; methyl methacrylate/styrene/α-methylstyrene/maleic anhydride copolymer, refractive index of 1.50 to 1.58; methyl methacrylate/vinyl toluene/maleic anhydride copolymer, refractive index of 1.50 to 1.58; fluorine-containing polymers having a refractive index of 1.38 to 1.48; and the deuteration products of the foregoing polymers.

3. The optical fiber assembly of Claim 1, wherein the value $(n_1-n_2)$ is in the range of 0.01 to 0.20.

4. The optical fiber assembly of Claim 1, wherein the thickness of said cladding is about 1 to 30 μm.

5. The optical fiber assembly of Claim 4, wherein the thickness of said cladding is about 2 to 20 μm.

6. The optical fiber assembly of Claim 1, wherein the thickness of said embedding material is about 0.5 to 100 μm.

7. The optical fiber assembly of Claim 6, wherein the thickness of said embedding material is about 1 to 50 μm.

8. The optical fiber assembly of Claim 1, wherein the polyfluoroalkyl ester (A) of acrylic acid or methacrylic acid comprises the products of the ester-forming reaction of trifluoroethanol, tetrafluoropropanol or pentafluoropropanol and acrylic acid or methacrylic acid.

9. The optical fiber assembly of Claim 1, wherein said vinyl monomer (B) comprising at least one hydrophilic group comprises carboxyl group-containing monomers, glycidyl group-containing monomers, carboxylic acid-amine group containing monomers, amide group-containing monomers, and hydroxyl group-containing monomers.

10. The optical fiber assembly of Claim 9, wherein said vinyl monomer comprising at least one hydrophilic group comprises acrylic acid and methacrylic acid.

11. The optical fiber assembly of Claim 1, wherein said copolymerizable vinyl monomer (C) comprises methyl methacrylate, ethyl methacrylate, n-propyl methacrylate, n-butyl methacrylate, nonyl methacrylate, lauryl methacrylate, methyl acrylate, n-butyl acrylate, 2-ethylhexyl acrylate, styrene, α-methylstyrene and maleic anhydride or mixture thereof.

12. A process for the preparation of optical fiber assemblies comprising at least two plastic optical fibers arranged substantially in parallel to each other and embedded in an embedding material, wherein

(1) at least two core-cladding optical fibers comprising a core of a polymer having a refractive index $n_1$, and a cladding of a polymer having a refractive index $n_2$, wherein the refractive indices $n_1$ and $n_2$ satisfy the following relationship [I]:

$$n_1 - n_2 > 0.01 \qquad [I]$$

are extruded together in an embedding portion composed of a melt of a polymer having refractive index $n_3$, wherein the refractive indices $n_2$ and $n_3$ satisfy the following relationship [II]:

$$n_3 - n_2 > 0 \qquad [II]$$

to form a sheet or rod in which the optical fibers are arranged substantially in parallel to each other, and then, the sheet or rod is cooled to be solidified, or

(2) polymers having refractive indices $n_1$, $n_2$ and $n_3$ satisfying the requirements of the formulae [I] and [II] are extruded from a spinneret in the form of optical fibers having an embedding polymer surrounding the optical fibers with at least two of the individual optical fibers arranged substantially in parallel to each other before they are cooled to be solidified, whereby they are bonded to each other through the embedding portions by fusion, and then, the optical fibers surrounded by the embedding are cooled to be solidified, or

(3) multilayer core-cladding optical fibers and an embedding polymer, formed in the same manner as in the second method (2), are cooled and thereby solidified and a plurality of these optical fibers surrounded by embedding are arranged substantially in parallel and bonded together through the embedding portions by heating them, characterized in that the cladding polymer comprises a copolymer comprising (A) 30 to 99.95% by weight of a polyfluoroalkyl ester of acrylic acid or methacrylic acid, (B) 0.05 to 10% by weight of a vinyl monomer containing at least one hydrophilic group and (C) 0 to 69.95% by weight of one or more copolymerizable vinyl monomers, thereby attenuating the refractive index $n_2$ of said cladding polymer.

13. The process for the preparation of optical fiber assemblies according to Claim 12, wherein streams of a melt of said core polymer are first formed in the spinneret assembly, then streams of a melt of said cladding polymer are formed around said core polymer streams, then streams of a melt of said embedding polymer are formed around said cladding polymer streams, and then the formed three-layered composite melt streams are extruded from said spinneret assembly.

14. The process for the preparation of optical fiber assemblies according to Claim 12, wherein the thickness of said cladding is about 1 to 30 µm.

15. The process for the preparation of optical fiber assemblies according to Claim 12, wherein the thickness of said embedding material is about 0.5 to 100 µm.

16. The process for the preparation of optical fiber assemblies according to Claim 14, wherein the thickness of said cladding is controlled by drawing the multi-layer composite polymers comprising the core-cladding optical fibers and the embedding material, and extruding said multi-layer composite polymers from the spinneret assembly.

17. The process for the preparation of optical fiber assemblies according to Claim 16, wherein said multi-layer composite polymers are extruded from the spinneret assembly at a temperature of about 120 to 180°C and a draw ratio of about 1.1 to 5.0.

18. The process for the preparation of optical fiber assemblies according to Claim 15, wherein the thickness of said embedding material is controlled by drawing the multi-layer composite polymers comprising the core-cladding optical fibers and the embedding material, and extruding said multi-layer composite polymers from the spinneret assembly.

19. The process for the preparation of optical fiber assemblies according to Claim 18, wherein said multi-layer composite polymers are extruded from the spinneret assembly at a temperature of about 120 to 180°C and a draw ratio of about 1.1 to 5.0.

**Patentansprüche**

1. Lichtleitfaser-Anordnung umfassend wenigstens zwei Lichtleitfasern aus Kunststoff und ein Einbettungsmaterial (5), wobei die genannten Lichtleitfasern aus Kunststoff im wesentlichen parallel zueinander angeordnet und in dem genannten Einbettungsmaterial (5) eingebettet sind, jede Lichtleitfaser aus Kunststoff einen Kern (1) aus einem Polymeren mit einem Brechungsindex $n_1$ und eine Umhüllung (2) aus einem Polymeren mit einem Brechungsindex $n_2$ umfaßt, wobei die Brechungsindices $n_1$ und $n_2$ der folgenden Beziehung [I] genügen

$$n_1 - n_2 > 0{,}01 \qquad [I]$$

und wobei das genannte Einbettungsmaterial ein Polymeres mit einem Brechungsindex $n_3$ umfaßt, dadurch gekennzeichnet, daß das Polymere der Umhüllung (2) ein Copolymeres ist umfassend (A) 30 bis

99,95 Gew.-% eines Polyfluoralkylesters von Acrylsäure oder Methacrylsäure, (B) 0,05 bis 10 Gew.-% eines Vinylmonomeren, des wenigstens eine hydrophile Gruppe enthält, und (C) 0 bis 69,96 Gew.-% eines oder mehrerer copolymerisierbarer Vinylmonomerer, wodurch der Brechungsindex $n_2$ des genannten Umhüllungspolymeren herabgesetzt wird, wobei die genannten Brechungsindices $n_2$ und $n_3$ der folgenden Bezeihung [II] genügen

$$n_3-n_2>0 \qquad [II]$$

2. Lichtleitfaser-Anordnung nach Anspruch 1, bei der das genannte Kernpolymere der Lichtleitfasern aus Kunststoff umfaßt: Polystyrol, Brechungsindex 1,59; Polymethylmethacrylat, Brechungsindex 1,49; Styrol/Methylmethacrylat-Copolymere, Brechungsindex von 1,50 bis 1,58; Poly-4-methyl-1-penten, Brechungsindex 1,46; Polycarbonat, Brechungsindex von 1,50 bis 1,59; Methylmethacrylat/Styrol/Maleinsäureanhydrid-Copolymere, Brechungsindex von 1,50 bis 1,58; Methylmethacrylat/Styrol/α-Methylstyrol/Maleinsäureanhydrid-Copolymere, Brechungsindex von 1,50 bis 1,58; Methylmethacrylat/Vinyltoluol/Maleinsäureanhydrid-Copolymere, Brechungsindex von 1,50 bis 1,58; fluorhaltige Polymere mit einem Brechungsindex von 1,38 bis 1,48; und die Deuterierungsprodukte der vorgenannten Polymeren.

3. Lichtleitfaser-Anordnung nach Anspruch 1, bei der der Wert $(n_1-n_2)$ im Bereich von 0,01 bis 0,20 liegt.

4. Lichtleitfaser-Anordnung nach Anspruch 1, bei der die Dicke der genannte Umhüllung etwa 1 bis 30 µm beträgt.

5. Lichtleitfaser-Anordnung nach Anspruch 4, bei der die Dicke der genannte Umhüllung etwa 2 bis 20 µm beträgt.

6. Lichtleitfaser-Anordnung nach Anspruch 1, bei der die Dicke des genannten Einbettungsmaterials etwa 0,5 bis 100 µm beträgt.

7. Lichtleitfaser-Anordnung nach Anspruch 6, bei der die Dicke des genannten Einbettungsmaterials etwa 1 bis 50 µm beträgt.

8. Lichtleitfaser-Anordnung nach Anspruch 1, bei der der Polyfluoralkylester (A) von Acrylsäure oder Methacrylsäure die Produkte der esterbildenden Umsetzung von Trifluorethanol, Tetrafluorpropanol oder Pentafluorpropanol und Acrylsäure oder Methacrylsäure umfaßt.

9. Lichtleitfaser-Anordnung nach Anspruch 1, bei der das genannte Vinylmonomere (B) mit wenigstens einer hydrophilen Gruppe Carboxylgruppen enthaltende Monomere, Glycidylgruppen enthaltende Monomere, Carboxylsäure-Amingruppen enthaltende Monomere, Amidgruppen enthaltende Monomere und Hydroxylgruppen enthaltende Monomere umfaßt.

10. Lichtleitfaser-Anordnung nach Anspruch 9, bei der das genannte Vinylmonomere mit wenigstens einer hydrophilen Gruppe Acrylsäure und Methacrylsäure umfaßt.

11. Lichtleitfaser-Anordnung nach Anspruch 1, bei der das genannte copolymerisierbare Vinylmonomere (C) Methylmethacrylat, Ethylmethacrylat, n-Propylmethacrylat, n-Butylmethacrylat, Nonylmethacrylat, Laurylmethacrylat, Methacrylat, n-Butylacrylat, 2-Ethylhexylacrylat, Styrol, α-Methylstyrol und Maleinsäureanhydrid sowie Mischungen davon umfaßt.

12. Verfahren zur Herstellung von Lichtleitfaser-Anordnungen umfassend wenigstens zwei Lichtleitfasern aus Kunststoff, die im wesentlichen parallel zueinander angeordnet und in einem Einbettungsmaterial eingebettet sind, bei dem

(1) wenigstens zwei Kern-Umhüllungs-Lichtleitfasern umfassend einen Kern aus einem Polymeren mit einem Brechungsindex $n_1$ und eine Umhüllung aus einem Polymeren mit einem Brechungsindex $n_2$, wobei die Brechungsindices $n_1$ und $n_2$ der folgenden Beziehung [I] genügen:

$$n_1-n_2>0,01 \qquad [I]$$

zusammen in eine Einbettungsmasse, bestehend aus einer Schmelze eines Polymeren mit einem Brechungsindex $n_3$, wobei die Brechungsindices $n_2$ und $n_3$ der folgenden Beziehung [II] genügen:

$$n_3-n_2>0 \qquad [II]$$

unter Ausbildung einer Platte oder eines Stabes extrudiert werden, in welchen die Lichtleitfasern im wesentlichen parallel zueinander angeordnet sind, und anschließend die Platte oder der Stab zur Verfestugung abgekühlt wird, oder

(2) Polymere mit den Brechungsindices $n_1$, $n_2$ und $n_3$, die den Bedingungen der Formeln [I] und [II] genügen, aus einer Spinndüse in Form von Lichtleitfasern extrudiert werden, die ein Einbettungspolymeres aufweisen, das die Lichtleitfasern umgibt, wobei wenigstens zwei der einzelnen Lichtleitfasern im wesentlichen parallel zueinander angeordnet werden, bevor man sie zur Verfestigung abkühlt, wodurch sie mit Hilfe der Einbettungsanteile durch Verschmelzung miteinander verbunden werden, und dann die mit der Einbettung umgebenden Lichtleitfasern zur Verfestigung abgekühlt werden, oder

(3) Mehrschicht-Kern-Umhüllungs-Lichtleitfasern und ein Einbettungspolymeres, welche auf die

gleiche Weise wie nach der zweiten Methode (2) hergestellt worden sind, abgekühlt und dabei verfestigt werden und eine Mehrzahl dieser von der Einbettung umgebenen Lichtleitfasern im wesentlichen parallel zueinander angeordnet und durch Erhitzung der Einbettungsanteile miteinander verbunden werden, dadurch gekennzeichnet, daß das Umhüllungspolymere ein Copolymeres umfaßt, welches (A) 30 bis 99,95 Gew.-% eines Polyfluoralkylesters von Acrylsäure oder Methacrylsäure, (B) 0,05 bis 10 Gew.-% eines Vinylmonomeren mit wenigstens einer hydrophilen Gruppe und (C) 0 bis 69,95 Gew.-% eines oder mehrerer copolymerisierbarer Vinylmonomerer umfaßt, wodurch der Brechungsindex $n_2$ des genannten Umhüllungspolymeren herabgesetzt wird.

13. Verfahren zur Herstellung von Lichtleitfaser-Anordnungen nach Anspruch 12, bei dem in der Spinndüsenanordnung zunächst Schmelzströme des genannten Kernpolymeren, dann Schmelzströme des genannten Umhüllungspolymeren um die genannten Kernpolymerenströme herum und dann Schmelzströme des genannten Einbettungspolymeren um die genannten Umhüllungspolymerenströme herum gebildet werden, und dann die gebildeten Drei-Schicht-Verbundschmelzströme aus der genannte Spinndüsenanordnung extrudiert werden.

14. Verfahren zur Herstellung von Lichtleitfaser-Anordnungen nach Anspruch 12, bei dem die Dicke der genannten Umhüllung etwa 1 bis 30 µm beträgt.

15. Verfahren zur Herstellung von Lichtleitfaser-Anordnungen, bei denen die Dicke des genannten Einbettungsmaterials etwa 0,5 bis 100 µm beträgt.

16. Verfahren zur Herstellung von Lichtleitfaser-Anordnungen nach Anspruch 14, bei dem die Dicke der genannten Hülle durch Verstrecken der die Kern-Umhüllungs-Lichtleitfasern und das Einbettungsmaterial umfassenden Mehrschicht-Verbundpolymeren und Extrudieren der genannten Mehrschicht-Verbundpolymeren aus der Spinndüsenanordnung kontrolliert wird.

17. Verfahren zur Herstellung von Lichtleitfaser-Anordnungen nach Anspruch 16, bei dem die genannten Mehrschicht-Verbundpolymeren bei einer Temperatur von etwa 120 bis 180°C und einem Verstreckungsverhältnis von etwa 1,1 bis 5,0 aus der Spinndüsenanordnung extrudiert werden.

18. Verfahren zur Herstellung von Lichtleitfaser-Anordnungen nach Anspruch 15, bei dem die Dicke des genannten Einbettungsmaterials durch Verstrecken der die Kern-Umhüllungs-Lichtleitfasern und das Einbettungsmaterial umfassenden Mehrschicht-Verbundpolymeren und Extrudieren der genannten Mehrschicht-Verbundpolymeren aus der Spinndüsenanordnung kontrolliert wird.

19. Verfahren zur Herstellung von Lichtleitfaser-Anordnungen nach Anspruch 18, bei dem die genannten Mehrschicht-Verbundpolymeren bei einer Temperatur von etwa 120 bis 180°C und einem Verstreckungsverhältnis von etwa 1,1 bis 5,0 aus der Spinndüsenanordnung extrudiert werden.

**Revendications**

1. Un assemblage de fibres optiques comprenant au moins deux fibres optiques en matière plastique et une matière d'enrobage (5), lesdites fibres optiques en matière plastique étant disposées sensiblement parallèlement entre elles et noyées dans ladite matière d'enrobage (5), dans lequel chaque fibre optique en matière plastique comprend un coeur (1) constitué d'un polymère ayant un indice de réfraction $n_1$ et une gaine (2) constituée d'un polymère ayant un indice de réfraction $n_2$, dans lequel les indices de réfractions $n_1$ et $n_2$ vérifient la relation [I] suivante

$$n_1-n_2>0{,}01 \qquad [I]$$

et dans lequel ladite matière d'enrobage consiste en un polymère ayant un indice de réfraction $n_3$, caractérisé en ce que le polymère dela gaine (2) est un copolymère comprenant (A) 30 à 99,95% en poids d'un ester polyfluoroalkylique d'acide acrylique ou d'acide méthacrylique, (B) 0,05 à 10% en poids d'un monomère vinylique contenant au moins un groupe hydrophile et (C) 0 à 69,95% en poids d'un ou plusieurs monomères vinyliques copolymérisables, pour réduire ainsi l'indice de réfraction $n_2$ dudit polymère de la gaine, lesdits indices de réfraction $n_2$ et $n_3$ vérifiant la relation [II] suivante

$$n_3-n_2>0 \qquad [II]$$

2. L'assemblage de fibres optiques selon la revendication 1, dans lequel ledit polymère de coeur des fibres optiques en matière plastique consiste en: polystyrène, indice de réfraction 1,59; polyméthacrylate de méthyle, indice de réfraction 1,49; copolymère styrène/méthacrylate de méthyle, indice de réfraction 1,50 à 1,58; poly(4-méthyle-1-pentène), indice de réfraction 1,46; polycarbonate, indice de réfraction 1,50 à 1,59; copolymère méthacrylate de méthyl/styrène/anhydride maléique, indice de réfraction 1,50 à 1,58; copolymère méthacrylate de méthyle/styrène/α-méthylstyrène/anhydride maléique, indice de réfraction 1,50 à 1,58; copolymère méthacrylate de méthyle/vinyltoluène/anhydride maléique, indice de réfraction 1,50 à 1,58; polymères fluorés ayant un indice de réfraction de 1,38 à 1,48; et les produits de deutération des polymères précédents.

3. L'assemblage de fibres optiques de la revendication 1, dans lequel la valeur $(n_1-n_2)$ est comprise dans l'intervalle de 0,01 à 0,20.

4. L'assemblage de fibres optiques de la revendication 1, dans lequel l'épaisseur de ladite gaine est d'environ 1 à 30 µm.

5. L'assemblage de fibres optiques de la revendication 4, dans lequel l'épaisseur de ladite gaine est d'environ 2 à 20 µm.

6. L'assemblage de fibres optiques de la revendication 1, dans lequel l'épaisseur de ladite matière d'enrobage est d'environ 0,5 à 100 µm.

7. L'assemblage de fibres optiques de la revendication 6, dans lequel l'épaisseur de ladite matière d'enrobage est d'environ 1 à 50 µm.

8. L'assemblage de fibres optiques de la revendication 1, dans lequel l'ester polyfluoroalkylique (A) d'acide acrylique ou d'acide méthacrylique consiste en les produits de la réaction d'estérification de trifluoroéthanol, tétrafluoropropanol ou pentafluoropropanol avec l'acide acrylique ou l'acide méthacrylique.

9. L'assemblage de fibres optiques de la revendication 1, dans lequel ledit monomère vinylique (B) comprenant au moins un groupe hydrophile est choisi parmi les monomères à groupe carboxyle, les monomères à groupe glycidyle, les monomères à groupes amino et acide carboxylique, les monomère à groupe amido et les monomères à groupe hydroxyle.

10. L'assemblage de fibres optiques de la revendication 9, dans lequel ledit monomère vinylique comprenant au moins une groupe hydrophile consiste en l'acide acrylique et l'acide méthacrylique.

11. L'assemblage de fibres optiques de la revendicatiaon 1, dans lequel ledit monomère vinylique copolymérisable (C) est constitué de méthacrylate de méthyle, de méthacrylate d'éthyle, de méthacrylate de n-propyle, de méthacrylate de n-butyle, de méthacrylate de nonyle, de méthacrylate de lauryle, d'acrylate de méthyle, d'acrylate de n-butyle, d'acrylate de 2-éthylhexyl, de styrène, d'α-méthylstyrène et d'anhydride maléique ou d'un mélange de ceux-ci.

12. Un procédé pour la préparation d'assemblages de fibres optiques comprenant au moins deux fibres optiques en matière plastique disposées sensiblement parallèlement entre elles et noyées dans une matière d'enrobage, dans lequel

(1) au moins deux fibres optiques du type coeur-gaine comprenant un coeur constitué d'un polymère ayant un indice de réfraction $n_1$ et une gaine constituée d'un polymère ayant un indice de réfraction $n_2$, les indices de réfractions $n_1$ et $n_2$ vérifiant la relation [I] suivante:

$$n_1 - n_2 > 0{,}01 \qquad [I]$$

sont extrudées ensemble dans un enrobage constitué d'une masse fondue d'un polymère ayant un indice de réfraction $n_3$, les indices de réfraction $n_2$ et $n_3$ vérifiant la relation [II] suivante:

$$n_3 - n_2 > 0 \qquad [II]$$

pour former une nappe ou une tige dans laquelle les fibres optiques sont disposées sensiblement parallèlement entre elles, puis la nappe ou la tige est refroidie pour être solidifiée, ou bien

(2) des polymères ayant des indices de réfraction $n_1$, $n_2$ et $n_3$ satisfaisant aux conditions des formules [I] et [II] sont extrudés d'une fillière sous forme de fibres optiques comportant une matière d'enrobage qui entoure les fibres optiques où au moins deux des fibres optiques individuelles sont disposées sensiblement parallèlement entre elles avant d'être refroidies pour être solidifiées, si bien qu'elles sont liées entre elles par fusion par l'intermédiaire de l'enrobage, puis les fibres optiques entourées par la matière d'enrobage sont refroidies pour être solidifiées, ou encore

(3) des fibres optiques multicouche du type coeur-gaine et un polymère d'enrobage, formés de la même manière que dans le second procédé (2), sont refroidis et ainsi solidifiés, et plusieurs de ces fibres optiques entourées d'un enrobage, sont disposées sensiblement parallèlement et liées ensemble par chauffage par l'intermédiaire des parties enrobantes, caractérisé en ce que le polymère de gaine consiste en un polymère comprenant (A) 30 à 99,95% en poids d'un ester polyfluoroalkylique d'acide acrylique ou d'acide méthacrylique, (B) 0,05 à 10% en poids d'un monomère vinylique contenant au moins un groupe hydrophile, et (C) 0 à 69,95% en poids d'un ou plusieurs monomères vinyliques copolymérisables, de manière à réduire l'indice de réfraction $n_2$ dudit polymère de gaine.

13. Le procédé pour la préparation d'assemblages de fibres optiques selon la revendication 12, dans lequel des courants d'une masse fondue dudit polymère de coeur sont tout d'abord formés dans l'ensemble de filières, puis des courants d'une masse fondue dudit polymère de gaine sont formés autour desdits courants du polymère de coeur, puis des courants d'une masse fondue dudit polymère d'enrobage sont formés autour desdits courants du polymère de gaine, puis les courants de masses fondues du composite tricouche formé sont extrudés dudit assemblage de filières.

14. Le procédé pour la préparation d'assemblages de fibres optiques selon la revendication 12, dans lequel l'épaisseur de ladite gaine est d'environ 1 à 30 µm.

15. Le procédé pour la préparation d'assemblages de fibres optiques selon la revendication 12, dans lequel l'épaisseur de ladite matière d'enrobage est d'environ 0,5 à 100 µm.

16. Le procédé pour la préparation d'assemblages de fibres optiques selon la revendication 14, dans lequel l'épaisseur de ladite gaine est réglée en étirant les polymères du composite multicouche qui

constituent les fibres optiques du type coeur-gaine et la matière d'enrobage, et en extrudant de l'ensemble de filières lesdits polymères du composite multicouche.

17. Le procédé pour la préparation d'assemblages de fibres optiques selon la revendication 16, dans lequel lesdits polymères du composite multicouche sont extrudés de l'ensemble de fillières à une température d'environ 120 à 180°C et un taux d'étirage d'environ 1,1 à 5,0.

18. Le procédé pour la préparation d'assemblages de fibres optiques selon la revendication 15, dans lequel l'épaisseur de ladite matière d'enrobage est réglée en étirant les polymères du composite multicouche qui constituent les fibres optiques du type coeur-gaine et la matière d'enrobage, et en extrudant de l'ensemble de filières lesdits polymères du composite multicouche.

19. Le procédé pour la préparation d'assemblages de fibres optiques selon la revendication 18, dans lequel lesdits polymères du composite multicouche sont extrudés de l'ensemble de filières à une température d'environ 120 à 180°C et un taux d'étirage d'environ 1,1 à 5,0.

Fig. 1

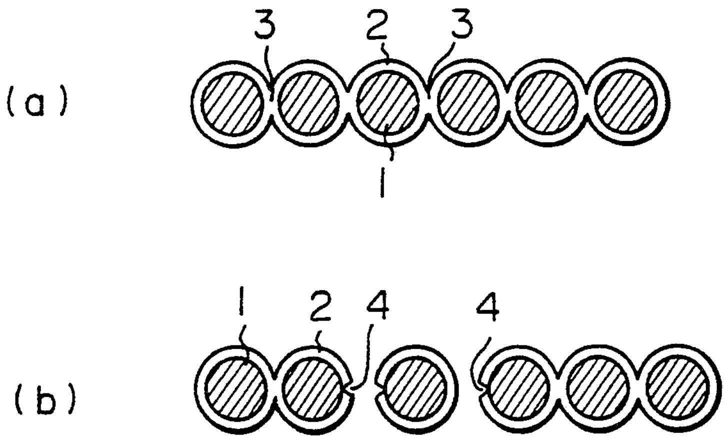


Fig. 2

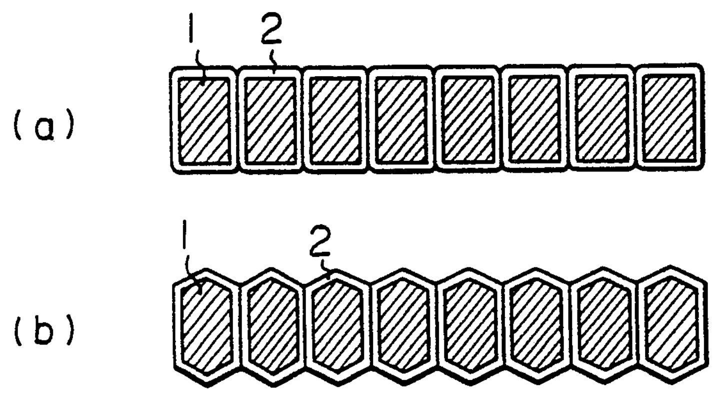


Fig. 3

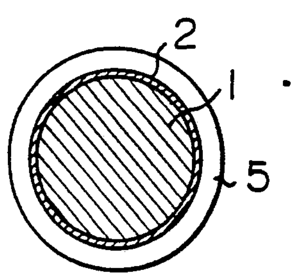

Fig. 4

(a)

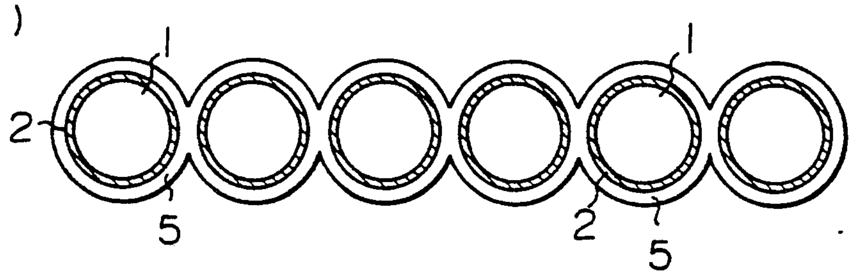


(b)

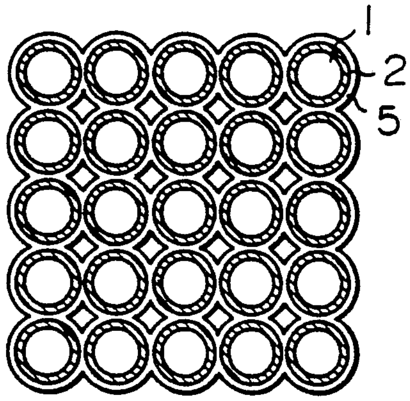


(c)

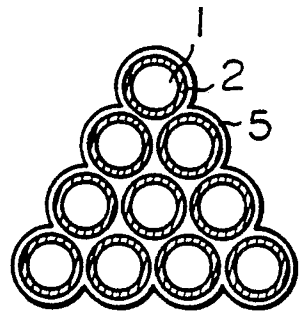


(d)

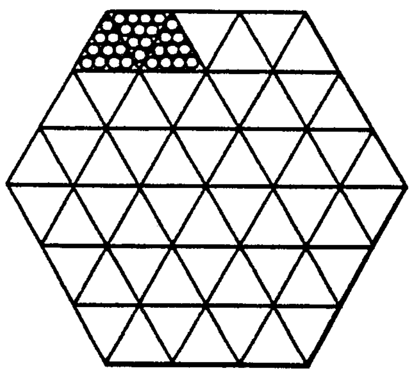

Fig. 5

(a)

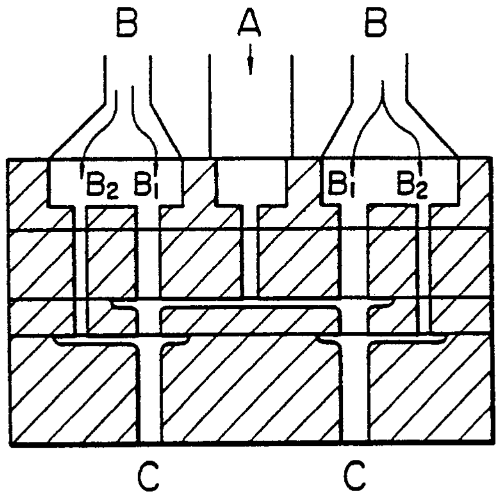


(b)